# EUROPÄISCHE PATENTSCHRIFT

(11) **EP 2 058 581 B1**
(45) Veröffentlichungstag und Bekanntmachung des Hinweises auf die Patenterteilung: **18.09.2013**
(21) Anmeldenummer: 08019780.9
(22) Anmeldetag: 12.11.2008
(51) Int. Cl.: F21S 8/00, F21S 8/08, F21W 131/103, F21Y 101/02

(54) **LED-Leuchte zur Gestaltung der Lichtstärkeverteilung**
LED light to design light intensity distribution
Lampe DEL destinée à la conception de la distribution de la puissance d'éclairage

(30) Priorität: 12.11.2007 DE 102007053790
(43) Veröffentlichungstag der Anmeldung: 13.05.2009
(73) Patentinhaber: Siteco Beleuchtungstechnik GmbH, 83301 Traunreut (DE)
(72) Erfinder: Teklak, Janusz, 83278 Traunstein (DE); Härtl, Michael, 83278 Traunstein (DE); Lukanow, Stephan, 83377 Vachendorf (DE); Prodell, Peter, 83308 Trostberg (DE)
(74) Vertreter: Schohe, Stefan

(56) Entgegenhaltungen:
- WO-A1-03/036160
- CN-A- 101 059 213
- DE-A1- 10 315 417
- DE-U1- 20 003 644
- DE-U1- 20 107 420
- JP-A- 2004 200 102
- US-A1- 2003 090 910
- US-B1- 6 784 357

## Beschreibung

Die Erfindung betrifft eine Leuchte mit LEDs (lichtemittierenden Dioden) als Leuchtmittel. Insbesondere betrifft die Erfindung Außenleuchten mit LEDs zur Beleuchtung von Straßen.

Aus dem Stand der Technik sind zahlreiche Beispiele von Leuchten, die auf LEDs beruhen, bekannt. Beispielsweise offenbart die WO 02/16826 Leuchten für den Innenraum, welche neben herkömmlichen Lampen auch LEDs als Leuchtmittel besitzen. Die LEDs sind entlang einer Ebenen oder entlang einer einfach gebogenen Fläche angeordnet.

WO 2006/060905 offenbart eine Anordnung von LEDs auf zwei ebenen Flächen, deren Neigungswinkel gegeneinander verstellt werden kann. Vorzugsweise sind die LEDs mit ihrer Hauptabstrahlrichtung mit einem von 90° abweichenden Winkel auf der ebenen Trägerfläche angebracht. Diese Leuchte wird auch als Straßenleuchte eingesetzt.

US 6,784,357 B1 offenbart eine solarbetriebene Straßenleuchte. Mehrere LEDs sind auf einer Trägerfläche angeordnet. Die Trägerfläche kann eben, kugelförmig oder elliptisch nach innen gewölbt ausgebildet sein.

CN 101 059 213 A offenbart eine Leuchte mit mehreren LEDs, die auf einer nach innen zurückspringenden abgestuften Trägerfläche angeordnet sind. Auf der den LEDs gegenüberliegenden Seite der Trägerfläche sind Kühlkörper vorgesehen.

DE 201 07 420 U1 offenbart eine Leuchte mit einer zweidimensionalen flexiblen LED-Folienplatine, die als dreidimensionales Objekt aufgespannt wird.

DE 103 15 417 A1 offenbart eine Lichtplatte, in der LEDs integriert sind, die Licht nach einer oder beiden Seiten der Platte abgeben. Ferner ist ein Verfahren zum Verformen der Platte offenbart.

Aufgabe der Erfindung ist es, eine LED-Leuchte bereitzustellen, welche zur Gestaltung einer gewünschten Lichtstärkeverteilung für eine vorgegebene Beleuchtungsaufgabe optimiert ist.

Die Aufgabe wird durch eine Leuchte nach Anspruch 1 oder 2 gelöst.

Die Erfindung beruht auf der Beobachtung, daß eine Leuchte mit LEDs als Leuchtmittel eine höhere Gestaltungsfreiheit zur Realisierung einer gewünschten Lichtverteilung ermöglicht als dies mit herkömmlichen Leuchtmitteln zu erzielen wäre. Bei herkömmlichen Leuchtmitteln wird die Lichtlenkung in aller Regel durch optische Einrichtungen, wie reflektierende oder lichtbrechende Elemente vor oder hinter den Leuchtmitteln erzeugt. Demgegenüber verfolgt die vorliegende Erfindung ein anderes Konzept zur Gestaltung einer gewünschten Lichtverteilung der Leuchte.

Die Erfindung sieht eine Leuchte vor, die als Leuchtmittel mehrere LEDs aufweist, die auf wenigstens einer LED-Trägerfläche verteilt angeordnet sind, die in Richtung einer zu beleuchtenden Fläche ausrichtbar ist, wobei zur Erzielung einer gewünschten Leuchtendichteverteilung oder Beleuchtungsstärkeverteilung auf der zu beleuchtenden Fläche die LED-Trägerfläche gewölbt ist, wobei die Wölbung der LED-Trägerfläche wenigstens in Teilbereichen folgendem Konstruktionsprinzip unterliegt: jeder Punkt auf einem Teilbereich der LED-Trägerfläche besitzt zwei Schnittebenen (sogenannte Normalschnitte), die jeweils die Flächennormale an dem Punkt der LED-Trägerfläche enthalten und die mit einem Teilbereich der LED-Trägerfläche jeweils eine gekrümmte Schnittkurve definieren, wobei wenigstens eine der beiden Schnittkurven eine konkave Krümmung definiert.

Durch die erfindungsgemäße Krümmung der LED-Trägerfläche entlang zweier Raumrichtungen ergeben sich eine Vielzahl von Gestaltungsmöglichkeiten zur Erzielung von gewünschten Lichtverteilungskurven. Von besonderer Bedeutung ist dabei die konkave Krümmung entlang wenigstens einer Richtung, weil sich dadurch eine Bündelung in der Lichtverteilungskurve der entsprechenden Schnittebene der Leuchte erzielen läßt. Diese Anwendung ist insbesondere für Straßenleuchten von Vorteil, weil bei dieser Art von Leuchten abhängig von der C-Ebene eine bestimmte Lichtverteilung zur optimalen Ausleuchtung einer Straße erzielt werden muß. Als C-Ebenen werden die Ebenen bezeichnet, deren gemeinsame Schnittgrade das Lot vom Leuchtenmittelpunkt auf die zu beleuchtende Fläche, wie z.B. eine Straße, ist. Die Ebene C = 0° bzw. C = 180° verläuft parallel und die Ebene C = 90° bzw. C = 270° quer zur Fahrbahnrichtung. Die Ebene C = 90° ist zur Fahrbahnseite ausgerichtet.

Insbesondere für die C = 0° bzw. C = 180°-Ebene und/oder den daran angrenzenden Ebenen ist eine Bündelung gewünscht, die sich mit einer konkaven Krümmung der LED-Trägerfläche der erfindungsgemäßen Leuchte vorteilhaft realisieren läßt.

Bei der erfindungsgemäßen Leuchte definiert die andere der beiden Schnittkurven eine konvexe Krümmung. Die konvexe Krümmung sorgt im Ergebnis für eine breitere Verteilung des Lichts über mehrere C-Ebenen hinweg.

In einer alternativen Ausführungsform kann eine andere der beiden Schnittkurven auch eine konkave Krümmung definieren. Mit dieser Ausführungsform wird eine Lichtbündelung auch entlang dieser zweiten Schnittebene erzeugt. In dieser Ausführungsform weist die Leuchte mehrere LED-Trägerflächen auf, die jeweils Licht in unterschiedliche Raumwinkelbereiche in Richtung auf die zu beleuchtende Fläche abgeben.

Gemäß einer bevorzugten Ausführungsform verlaufen die Hauptabstrahlrichtungen der LEDs auf der LED-Trägerfläche in Richtung der jeweiligen Flächennormalen oder in einem Winkel zur Flächennormalen, der nicht mehr als 20°, bevorzugt nicht mehr als 10°, beträgt. Die Ausrichtung der LEDs wird bei der erfindungsgemäßen Leuchte durch die Krümmung der LED-Trägerfläche erzielt. Die LEDs brauchen daher auf der LED-Trägerfläche nicht geneigt angeordnet zu werden, um eine gewünschte Lichtverteilung zu erzielen. Die Ausrichtung etwa entlang der Flächennormalen, hat, abgesehen von der verhältnismäßig einfachen Herstellungsweise, den weiteren Vorteil, daß das von der LED um die Hauptabstrahlrichtung herum abgegebene Licht nicht durch benachbarte Bereiche der Leuchte abgeschattet wird. Dies trifft zu, selbst wenn der von der jeweiligen LED abgegebene Lichtkegel entlang der Hauptabstrahlrichtung der LED einen verhältnismäßig breiten Öffnungswinkel, z.B. bis zu 60°, besitzt.

Gemäß einer bevorzugten Ausführungsform weisen die LEDs eine rotationssymmetrische oder ovale Lichtverteilung bezüglich ihrer Hauptabstrahlrichtung auf. Derartige LEDs sind kostengünstig erhältlich. Die gewünschte Lichtverteilung der Leuchte läßt sich durch die Formgebung der LED-Trägerfläche dennoch nahezu beliebig mit diesen LEDs gestalten.

Gemäß einer bevorzugten Ausführungsform weisen die LEDs jeweils einzeln oder eine Gruppe von mehreren LEDs gemeinsam eine zugeordnete Optik auf, die lichtreflektierende, lichtbrechende und/oder lichtstreuende Komponenten umfaßt. Durch die zugeordnete Optik läßt sich insbesondere der Öffnungswinkel einer etwa kegelförmigen Lichtverteilungskurve um die Hauptabstrahlrichtung der LED beeinflussen.

Gemäß einer bevorzugten Ausführungsform besitzen wenigstens einige LEDs oder die Kombination aus einer oder mehreren LEDs mit jeweils zugeordneter Optik eine gebündelte Lichtverteilung, derart, daß die summierte Lichtstärke innerhalb eines Öffnungswinkels von 25°, bevorzugt von 15° gegenüber der Hauptabstrahlrichtung wenigstens 80% der Gesamtlichtstärke der LED bzw. der Gruppe von LEDs umfaßt.

Gemäß einer bevorzugten Ausführungsform sind auf der LED-Trägerfläche LEDs oder Kombinationen aus einer oder mehreren LEDs mit jeweils zugeordneter Optik mit unterschiedlich gebündelter Lichtverteilung angeordnet. Durch diese Maßnahme läßt sich, abgesehen von der Wölbung der Trägerplatte, weiterhin die Lichtverteilung der Gesamtleuchte beeinflussen. Die Bereiche der LED-Trägerfläche mit LEDs, deren Hauptabstrahlrichtungen in einen Raumwinkelbereich weisen, in welchem die zu beleuchtende Fläche, z.B. die Fläche einer Straße, weiter entfernt ist, werden mit LEDs mit einem besonders geringen Öffnungswinkel in der Lichtstärkeverteilung der LED bzw. mit entsprechender LED-Optik bestückt. Die anderen Bereiche der LED-Trägerfläche, die in Richtung der Raumwinkelbereiche weist, in denen die zu beleuchtende Fläche näher liegt, werden mit breitstrahlenderen LEDs bzw. entsprechenden LED-Optiken versehen. Dadurch wird von diesem Bereich der LED-Trägerplatte weniger Licht in einen gleich großen Raumwinkelbereich emittiert.

Alternativ oder zusätzlich läßt sich auch die Besetzungsdichte der LEDs auf der Trägerplatte, d.h. der mittlere Abstand der LEDs zur nächsten benachbarten LED auf der Trägerplatte variieren, um die Lichtverteilung der Gesamtleuchte wunschgemäß zu gestalten.

Gemäß einer Ausführungsform ist die summierte Lichtstärke von LEDs bzw. Kombination aus jeweils einer oder mehreren LEDs mit zugeordneter Optik auf einem Teilbereich der Lichtemissionsfläche um wenigstens 30% höher als die summierte Lichtstärke der LEDs bzw. der Kombinationen aus jeweils einer oder mehreren LEDs mit zugeordneter Optik auf einem anderen Teilbereich der Lichtemissionsfläche gleicher Größe.

Gemäß einer Ausführungsform sind die LEDs auf der Lichtemissionsfläche in Abschnitten angeordnet, die mehr als ±10%, vorzugsweise mehr als ±20% von dem mittleren Abstand zur nächsten benachbarten LED oder zur nächsten benachbarten LED mit etwa gleicher Leistung, z.B. innerhalb einer LED-Reihe, auf der LED-Trägerfläche abweichen.

Gemäß einer bevorzugten Ausführungsform sind die LEDs auf der Lichtemissionsfläche entlang von Reihen, vorzugsweise entlang von etwa parallelen Reihen angeordnet. Diese Art von Anordnung von LEDs lassen sich besonders einfach herstellen. Beispielsweise kann eine Reihe von LEDs durch ein gemeinsames Board oder durch mehrere Teile von aneinandergrenzenden Boards hergestellt werden, wobei die Boards Teil der LED-Trägerfläche bilden.

Die Boards können aus einem wärmeleitfähigen Material, insbesondere aus Metall, wie z.B. Aluminium, gebildet sein, um die durch die LEDs erzeugte Wärme besser abführen zu können.

Gemäß einer Ausführungsform sind die Boards aus einem elastischen Material gebildet.

Gemäß einer bevorzugten Ausführungsform, wie sie insbesondere für breitstrahlende Straßenleuchten, d.h. Straßenleuchten, die große Leuchtenabstände zulassen, oftmals gewünscht ist, nehmen die mittleren Abstände der LEDs auf der LED-Trägerfläche zu einem Rand oder zu zwei gegenüberliegenden Rändern der LED-Trägerfläche hin ab. Beispielsweise lassen sich durch die Teilbereiche der LED-Trägerfläche, die an den zwei gegenüberliegenden Seitenrändern angrenzen, die Bereiche seitlich der Straßenleuchte, d.h. in Richtung zur Fahrbahnlängserstreckung, ausleuchten. Eine besonders hohe Besetzungsdichte der LEDs in diesen Bereichen und alternativ oder zusätzlich LEDs bzw. LED-Optiken mit besonders gebündelter Lichtverteilung geben mehr Licht in diesen Raumwinkelbereich ab.

Gemäß einer bevorzugten Ausführungsform ist die LED-Trägerfläche spiegelsymmetrisch bezüglich einer vertikalen Symmetrieebene der Leuchte ausgebildet. Dies kann bei einer Straßenleuchte beispielsweise die Ebene C = 90° und, falls gewünscht, C = 270° sein, die quer zur Fahrbahnrichtung verlaufen. Durch eine konkave Krümmung in dieser Symmetrieebene wird das Licht auf die naheliegende Fahrbahn konzentriert. In der anderen Richtung, d.h. längs der Fahrbahnrichtung kann die LED-Trägerfläche insbesondere konvex ausgebildet sein, um die Fahrbahn über eine möglichst große Länge auszuleuchten. Die LED-Trägerflächen für Leuchten an besonderen Orten, beispielsweise im Kreisverkehr oder an Plätzen, können eine entsprechend modifizierte Wölbung aufweisen.

Gemäß einer Ausführungsform sind die LEDs in mehreren Reihen angeordnet, welche die Symmetrieebene schneiden, vorzugsweise etwa senkrecht, was in erster Linie eine besonders einfache Herstellung ermöglicht. Gemäß einer bevorzugten Weiterentwicklung dieser Ausführungsform können die Abstände der LEDs innerhalb der Reihe von der Symmetrieebene zu einem Seitenrand der Lichtemissionsfläche stufenweise oder kontinuierlich abnehmen, wodurch ein Maximum in der Lichtverteilungskurve der Leuchte etwa in Richtung der Flächennormalen an dem Seitenrand der LED-Trägerfläche erzeugt werden kann.

Zusätzlich oder alternativ können die LEDs oder Kombinationen aus einer oder mehreren LEDs mit zugeordneter Optik innerhalb einer Reihe zu jeweils einem Seitenrand der Lichtemissionsfläche kontinuierlich oder stufenweise stärker gebündelte Lichtverteilungen bezüglich ihrer jeweiligen Hauptabstrahlrichtung aufweisen. Dadurch läßt sich ebenfalls die bevorzugte Lichtverteilung z.B. Fahrbahnbeleuchtung erzielen.

Die LED-Trägerfläche weist auf der von der Fahrbahn abgewandten Seite, d.h. in dem C-Ebenen System die Ebenen mit C = 180° bis C = 360°, keine LEDs auf, sofern nicht ein zusätzlicher Verkehrsbereich, wie etwa ein Fußgängerweg, an deren fahrbahnseitigen Rand die Straßenleuchten in der Regel angeordnet sind, beleuchtet werden sollen. Für die letztgenannte Beleuchtungsaufgabe kann sich die LED-Trägerfläche auch in dem Bereich C = 180° bis C = 360° erstrecken.

Gemäß einer Ausführungsform weisen die LED-Reihen unterschiedliche Längen auf, insbesondere nehmen die Längen der LED-Reihe von der Mitte der LED-Trägerfläche zum oberen und unteren Rand der Leuchte schrittweise oder kontinuierlich ab.

Gemäß einer bevorzugten Ausführungsform ist die LED-Trägerfläche aus einem wärmeleitfähigen Material, insbesondere aus Metall, z.B. aus Aluminium, gebildet, um die durch die LEDs im Betrieb erzeugte Wärme abzuleiten. Sofern die LEDs auf Boards angeordnet sind, die in der LED-Trägerfläche integriert sind und vorzugsweise ebenfalls aus einem wärmeleitfähigen Material wie Metall, insbesondere Aluminium, gebildet sind, ist gemäß einer Ausführungsform ein thermischer Kontakt zwischen den Boards und dem Rest der LED-Trägerfläche vorgesehen. Dieser thermische Kontakt kann beispielsweise durch Wärmeleitpaste verbessert werden.

Gemäß einer bevorzugten Ausführungsform ist die LED-Trägerfläche auf einer den LEDs abgewandten Seite mit einem oder mehreren Kühlkörpern versehen, um die Wärme abzuleiten.

Gemäß einer alternativen Ausführungsform ist vorgesehen, daß die LED-Trägerfläche eine verhältnismäßig geringe Dicke aufweist, z.B. höchstens 5% der maximalen Längs- oder Quererstreckung der LED-Trägerfläche. Diese Konstruktion reicht in der Regel aus, um die von LEDs erzeugte Wärme an die Umgebung abführen zu können, weil durch die flächige Bauform eine große Oberfläche gebildet wird. Die flächige Ausführungsform hat auch weitere Vorteile. Beispielsweise lassen sich auf der den LEDs entgegengesetzten Seite der LED-Trägerfläche Solarzellen anordnen, um für eine Energieversorgung der Leuchte, ggf. über einem Zwischenspeicher, zu sorgen.

Gemäß einer Ausführungsform ist die LED-Trägerfläche, insbesondere auf der Seite, die mit LEDs besetzt ist, durch eine transparente Abdeckung überspannt. Für Außenleuchten kann dadurch insbesondere ein Schutz vor Feuchtigkeit oder Schmutzpartikeln gewährleistet werden. Die transparente Abdeckung kann jedoch auch lichttechnische Effekte hervorbringen. Beispielsweise kann die Abdeckung wenigstens teilweise mattiert ausgeführt sein, um das Licht der darunter angeordneten LEDs zu streuen. Es kann auch gewünscht sein, das Licht mehrerer LEDs, die beispielsweise unterschiedliche Farben aufweisen, zu mischen. Durch Teilbereiche der transparenten Abdeckung, die klar ausgebildet sind, findet hingegen keine Durchmischung der Lichtfarben statt. Dadurch lassen sich gewünschte Lichteffekte der Leuchte einstellen.

Gemäß einer bevorzugten Ausführungsform weist die Leuchte eine Aufnahme zur Montage an einem Mast oder einem anderen zur Montage von Außenleuchten geeigneten Träger auf. Insbesondere kann die LED-Trägerfläche in Richtung auf die Aufnahme zur Montage der Leuchte sich verjüngen oder kontinuierlich in diese übergehen. Dadurch ergibt sich nicht nur eine formschöne Leuchte, sondern die Leuchte bietet auch weniger Angriffsfläche für Wind. Ferner sind die Kantenflächen verringert, auf denen sich Schmutz absetzen kann.

Gemäß einer weiteren Ausführungsform weist die erfindungsgemäße Leuchte zwei Lichtemissionsflächen auf. Insbesondere können zwei Lichtemissionsflächen spiegelsymmetrisch bezüglich einer vertikalen Symmetrieebene der Leuchte angeordnet sein. Im Falle einer Straßenleuchte kann eine der beiden LED-Trägerflächen etwa senkrecht zu der Ebene C = 45° und die andere LED-Trägerfläche etwa senkrecht zu der Ebene C = 135° ausgerichtet sein. Vorzugsweise grenzen die beiden LED-Trägerflächen der Symmetrieebene aneinander und die Lichtemissionsflächen bilden in der Schnittkurve mit der Symmetrieebene eine konkave Krümmung. Allgemein sorgt die konkave Krümmung in der Vertikalebene für eine Bündelung des Lichts auf die Fahrbahn. Die Ausrichtung der LED-Trägerfläche zu beiden Seiten der Leuchte sorgt durch die LEDs nahe der Symmetrieebene für die gewünschte Lichtverteilung in der Fahrbahnlängserstreckung (C = 0° bzw. C = 180°-Ebene). Die LEDs an den äußeren Seitenrändern der LED-Trägerfläche sorgen für die Lichtverteilung in der Fahrbahnquererstreckung (C = 90°-Ebene).

Nachfolgend wird die erfindungsgemäße Leuchte anhand mehrerer bevorzugter Ausführungsformen im Zusammenhang mit den beigefügten Figuren erläutert.
- Figur 1: zeigt eine Straßenleuchte gemäß einer Ausführungsform der vorliegenden Erfindung.
- Figur 2: zeigt einen Schnitt durch die Leuchte entlang eines LED-Boards der Leuchte nach Figur 1.
- Figur 3: zeigt eine Lichtverteilungskurve der Leuchte nach Figur 1 in der Ebene C = 20° (linke Hälfte der Figur) bzw. C = 160° (rechte Hälfte der Figur).
- Figur 4: zeigt eine Straßenleuchte gemäß einer zweiten Ausführungsform der vorliegenden Erfindung.
- Figur 5: zeigt im Detail die Anordnung von LEDs in jeder LED-Reihe einer Leuchte nach Figur 1.

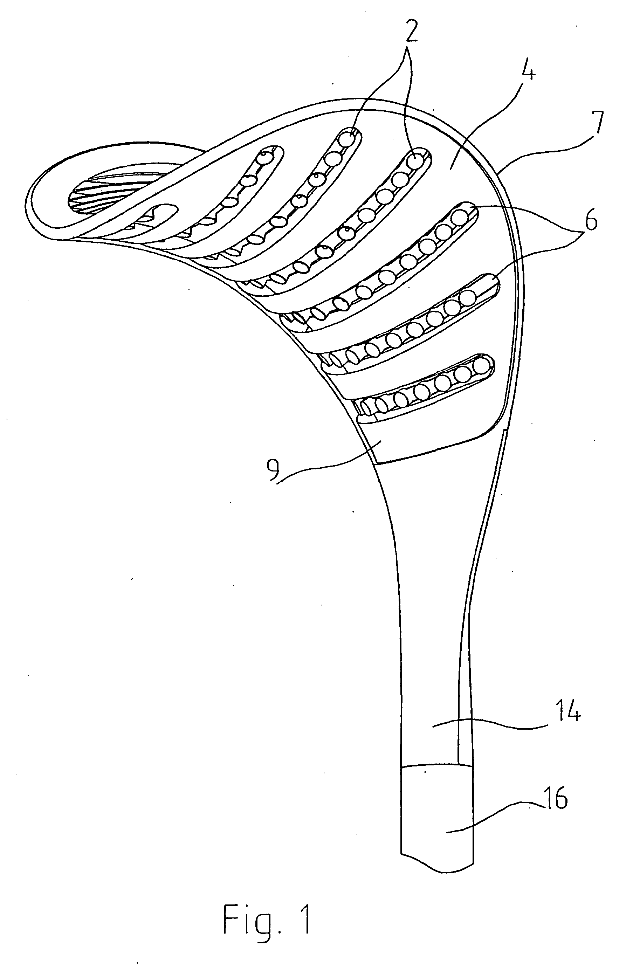

Bezugnehmend auf die Figur 1 ist eine Straßenleuchte dargestellt, die eine Vielzahl von LEDs 2 aufweist, die auf einer gewölbten LED-Trägerfläche 4 angeordnet sind.

Die LED-Trägerfläche 4 ist etwa blattförmig gewölbt.

Präzise ausgedrückt besitzt jeder Punkt auf der LED-Trägerfläche zwei gedachte Schnittebenen, die jeweils die Flächennormale auf diesem Punkt enthalten und die eine Schnittkurve mit der LED-Trägerfläche 4 bilden, die jeweils eine Krümmung aufweist. Eine der beiden Krümmungen ist konkav ausgebildet, und zwar für eine Schnittebene, die etwa entlang der vertikalen Richtung der Leuchte verläuft. Für eine zweite Schnittebene, die beispielsweise senkrecht zu der ersten Schnittebene verläuft, d.h. etwa eine horizontale Achse umfaßt, weist eine Schnittkurve mit der LED-Trägerfläche auf, die konvex gekrümmt ist.

Auf der Trägerfläche 4 sind die LEDs 2 entlang von mehreren Reihen 6 angeordnet, die sich auf der gewölbten LED-Trägerfläche etwa parallel erstrecken. Jede Reihe besitzt eine unterschiedliche Anzahl von LEDs 2. Die LEDs 2 einer Reihe 6 sind auf einen gemeinsamen Board angebracht (in den Figuren nicht dargestellt). Auf dem Board ist die elektrische Verdrahtung der LEDs vorgesehen (nicht dargestellt). Die Boards gemäß der ersten Ausführungsform verlaufen etwa senkrecht zur vertikalen Ebene der Leuchte, die auch eine vertikale Symmetrieebene der Leuchte bildet. Demgemäß weisen die Boards eine konvexe Krümmung auf. Vorzugsweise sind die Boards aus einem elastischen Material hergestellt, das es erlaubt, die Boards zum Anbringen auf der LED-Trägerfläche 8 zu biegen. Vorzugsweise sind die Reihen 6 von LEDs, wie in den Figuren dargestellt, so angeordnet, daß das entsprechende Board, welches die LED-Reihe 6 trägt, nur in einer Richtung gebogen werden muß. Die Boards können beispielsweise aus einem Flachmaterial hergestellt sein, welches genug Elastizität aufweist, um im auf der LED-Trägerfläche 8 montierten Zustand der Wölbung der Trägerfläche zu folgen.

Gemäß einer nicht dargestellten Ausführungsform können die Boards, insbesondere die längeren Boards in der Mitte, auch aus mehreren Einzelteilen zusammengesetzt sein.

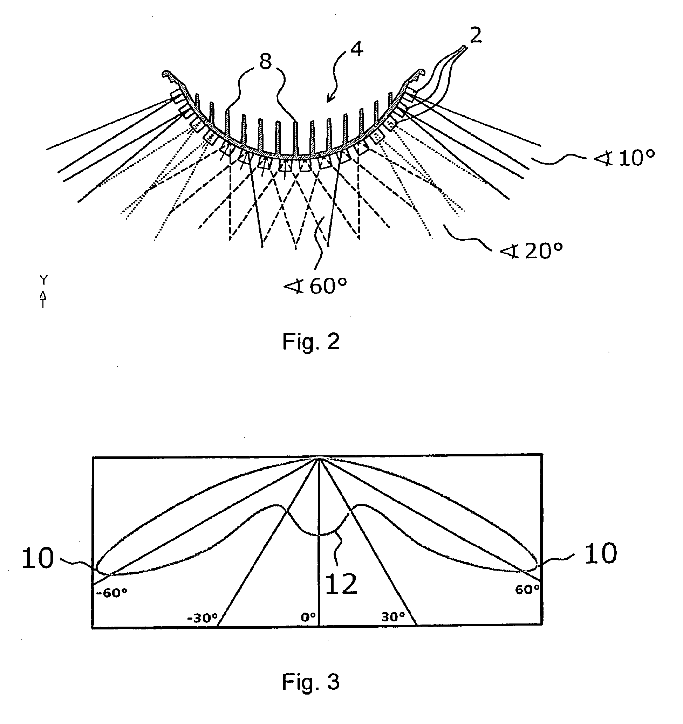

Die Boards sind in der LED-Trägerfläche 4 integriert bzw. bilden einen Teil von dieser. Gemäß einer alternativen Ausführungsform können die LEDs auch direkt auf einer durchgängigen LED-Trägerfläche 4 angebracht sein. Die Trägerfläche 4 selbst ist vorzugsweise aus einem Aluminiumguß hergestellt, um eine gute Wärmeableitung zu gewährleisten. Die Boards befinden sich in einem guten thermischen Kontakt mit der übrigen LED-Trägerfläche 4, beispielsweise ist der thermische Kontakt durch eine Wärmeleitpaste verbessert (nicht dargestellt). Wie in der Figur 2 dargestellt, kann die Wärmeableitung durch Kühlrippen 8 unterstützt werden, die auf der Rückseite der Trägerfläche 4 angeordnet sind.

Bezugnehmen auf die Figur 1 enthalten die LED-Reihen 6 unterschiedliche Anzahlen von LEDs 2. Etwa auf mittlerer Höhe der Leuchte sind die Reihen 6 mit der größten Anzahl von LEDs 2 versehen, während am oberen und unteren Ende der LED-Trägerfläche 4 die Reihen 6 mit einer geringeren Anzahl von LEDs vorgesehen sind. Die Abstände der LEDs innerhalb einer Reihe 6 nehmen zum Seitenrand 7 der Trägerfläche ab. Durch diese Maßnahme wird der Anteil des Lichtstroms, der in diese seitliche Richtung gelenkt wird, erhöht. Gemäß einer alternativen Ausführungsform können die LEDs auch in äquidistantem Abstand innerhalb der Reihen 6 angeordnet sein.

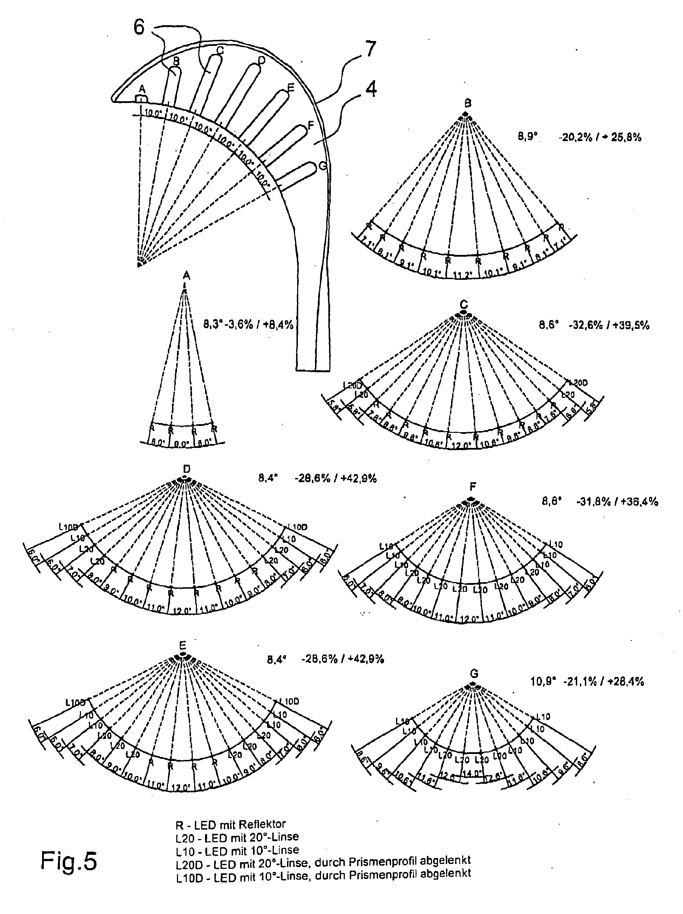

In der Figur 5 ist die Verteilung der LEDs innerhalb der Reihen 6 im Detail dargestellt. Die Leuchte gemäß dieser Ausführungsform weist insgesamt sieben Reihen 6 auf, welche mit A bis G bezeichnet sind. Die Reihen sind auf der LED-Trägerfläche 4 bezüglich eines gemeinsamen Mittelpunkts in gleichen Winkelabständen angeordnet. Dieser beträgt in der gezeigten Ausführungsform 10°. Innerhalb der Reihen variiert die Dichte der LEDs. In der Figur sind im Einzelnen für jede Reihe die Winkelabstände der LEDs bezüglich eines gemeinsamen Mittelpunkts dargestellt. Daraus berechnen sich die mittleren Winkelabstände in den Reihen, wie in der Figur 5 angegeben. Diese variieren zwischen 8,3° für die Reihe A bis 10,9° für die Reihe G. Ferner ist in der Figur 5 die prozentuale Abweichung der Winkelabstände von dem mittleren Winkel für jede Reihe angegeben. Der Winkelabstand der LEDs ist am Rand der Reihen geringer als der mittlere Abstand und in der Mitte der Reihen größer als der mittlere Abstand.

Bezugnehmend auf die Figur 2 ist die von jeder LED ausgehende Lichtverteilung dargestellt. Die Lichtverteilung ist etwa kegelförmig, wobei es drei verschiedene Sorten von LED-Optiken gibt, die sich durch kegelförmige Lichtverteilungen mit unterschiedlichen Öffnungswinkeln auszeichnen. Die LED-Optiken am Rande des Boards, welche demgemäß an den seitlichen Rändern 7 der LED-Trägerfläche 4 angrenzen, sorgen für einen Öffnungswinkel einer kegelförmigen Lichtverteilung von etwa 10°. Daran schließen sich weitere LEDs 2 mit einer Optik an, die eine kegelförmige Lichtverteilung mit einem Öffnungswinkel von etwa 20° aufweisen. Schließlich sind in der Mitte der LED-Reihen LEDs 2 mit einer Optik angeordnet, die für eine Lichtverteilung mit einem Öffnungswinkel von etwa 60° sorgen. Eine Lichtverteilung mit einem Öffnungswinkel α bedeutet dabei, daß die summierte Lichtstärke, die von der LED mit Optik in einem Kegel mit dem Öffnungswinkel von ±α/2 um die Hauptabstrahlrichtung der LED abgegeben wird, wenigstens 80% des Gesamtlichtstroms der LED mit Optik umfaßt. Dabei können die LEDs selbst von identischer Bauart sein. Der Öffnungswinkel der kegelförmigen Lichtverteilung wird alleine durch die jeweils zugeordnete Optik bestimmt.

In Figur 5 ist für ein Ausführungsbeispiel detailliert angegeben, an welchen Positionen Linsen mit den unterschiedlichen Optiken angeordnet sind. Die mit R bezeichneten Positionen sind mit LEDs mit einem Reflektor angeordnet, die eine Lichtverteilung mit einem Öffnungswinkel von beispielsweise 60° aufweisen. Die LEDs an den mit L20 bzw. L10 bezeichneten Positionen sind mit LEDs besetzt, die eine Linse, welche für einen Öffnungswinkel von 20° bzw. 10° sorgt, aufweisen. Die mit L20d und L10d bezeichneten Positionen sind mit LEDs besetzt, die zusätzlich zu den 20° bzw. 10°-Linsen eine weitere optische Ablenkung durch ein Prismenprofil aufweisen.

Durch die Geometrie der LED-Trägerfläche bzw. der sich dadurch vorgegebenen Ausrichtung der LEDs ergibt sich die gewünschte Lichtstärkeverteilung der Leuchte. Beispielsweise ist in Figur 3 die Lichtverteilungskurve schematisch dargestellt, welche die Leuchte nach Figur 2 in den Ebenen C = 20° (linke Hälfte der Figur 2) bzw. C = 160° (rechte Hälfte der Figur 2) erzeugt. Dies entspricht zwei vertikalen Schnittebenen durch die dreidimensionale Lichtstärkeverteilung der Straßenleuchte senkrecht zur Fahrbahnfläche mit einem Winkel von 20° bzw. 160° zur Fahrbahnlängserstreckung. Es zeigen sich in der Polardarstellung nach Figur 3 zwei ausgedehnte Maxima, die bei etwa ±60° zur Vertikalen liegen. Diese Maxima sorgen für eine gewünschte Breitstrahlung der Leuchte, um die Fahrbahn der Länge nach auszuleuchten. Diese Maxima werden im wesentlichen durch die LEDs erzeugt, die an den seitlichen Rändern 7 der LED-Trägerfläche 4 angeordnet sind. Unterstützt wird der Effekt der Ausbildung der Maxima 10 in der Lichtverteilungskurve durch die auf den engen Winkelbereich gebündelte Lichtverteilung der am Rand 7 angeordneten LEDs (vgl. Figur 2, LEDs mit einem Öffnungswinkel von 10°). Direkt unterhalb der Leuchte, d.h. um den Bereich von 0° gemäß der Polardarstellung nach der Figur 3, ist die Lichtstärke erheblich geringer. Gemäß der gezeigten Ausführungsform bildet sich ein kleines Nebenmaximum 12 bei 0° aus. Dieser Bereich der Lichtstärke dient zur Ausleuchtung des Fahrbahnbereichs direkt unterhalb der Leuchte. Da die in diesem Raumwinkelbereich zu beleuchtende Fläche sehr viel kleiner ist, reicht die geringere Lichtstärke in diesem Raumwinkelbereich aus, um die erforderliche Leuchtdichte bzw. Beleuchtungsstärke auf der Fahrbahnfläche zu erzeugen. In anderen Ausführungsformen der erfindungsgemäßen Leuchte ist kein Nebenmaximum vorhanden.

Die unterschiedlichen Öffnungswinkel der Lichtkegel der LEDs werden gemäß der gezeigten Ausführungsform durch unterschiedliche optische Elemente, die jeweils einer LED zugeordnet sind, erzeugt. In einer anderen Ausführungsform kann auch einer Gruppe von beispielsweise 2 bis 12 LEDs eine gemeinsame Optik zugeordnet sein.

Die Trägerfläche 4 ist vollständig mit einer Abdeckung 9 versehen, welche die LEDs vor Umwelteinflüssen schützt. Die Abdeckung 9 ist aus einem lichtdurchlässigen Material hergestellt, wobei die Teilbereiche der Abdeckung 9, welche die Reihen 6 überdecken, aus einem klar transparenten Material gebildet ist. Die Teilbereiche zwischen den Reihen 6 sind aus einem diffus streuenden Material gebildet. Unterhalb dieser Teilbereiche sind lichtschwächere LEDs mit unterschiedlichen Lichtfarben angeordnet (in der Figur nicht zu sehen). Die farbigen LEDs können separat von den lichtstarken LEDs angesteuert werden. Ferner ist vorgesehen, die unterschiedlichen Farben auch separat ansteuern zu können. Dadurch können wechselnde Lichteffekte oder Signale mit der Leuchte erzeugt werden. Insbesondere können die farbigen LEDs auf Teilbereichen der Lichtemissionsfläche getrennt schaltbar sein, z.B. um richtungsbezogene Signale in bezug auf unterschiedliche Fahrbahnrichtungen oder Fahrbahnspuren zu übermitteln.

Die LEDs mit unterschiedlicher Lichtfarbe sind vorzugsweise ebenfalls auf Boards angeordnet. Die LEDs mit farbigem Licht sind zwischen den in den Figuren dargestellten LED-Reihen 6 angeordnet. Die LEDs in den LED-Reihen 6 erzeugen hingegen vorzugsweise weißes Licht.

Die gewölbte LED-Trägerfläche ist mit einer verhältnismäßig geringen Dicke ausgeführt. Sie weist entlang ihrer jeweiligen Flächennormale eine Höhe von nicht mehr als 10 mm auf, wobei die Höhe der Kühlrippen 8 auf der Rückseite nicht berücksichtigt ist. Diese Form ermöglicht es, daß die gesamte Leuchte nur ein geringes Gewicht aufweist. Ferner bildet sie durch die geschwungene Form wenig Windwiderstand und ermöglicht trotzdem eine gute Kühlung der LEDs durch die große Oberfläche der LED-Trägerfläche.

Die LED-Trägerfläche 4 verjüngt sich am tiefsten Punkt der Leuchte zu einer Mastaufnahme 14, mit der die Leuchte auf einen Mast 16 aufgesetzt ist. Gemäß einer bevorzugten Ausführungsform läßt sich die Mastaufnahme 14 gegenüber dem Mast 16 drehen, so daß die Ausrichtung der Leuchte gegenüber der Fahrbahn nach der Montage der Leuchte noch eingestellt werden kann.

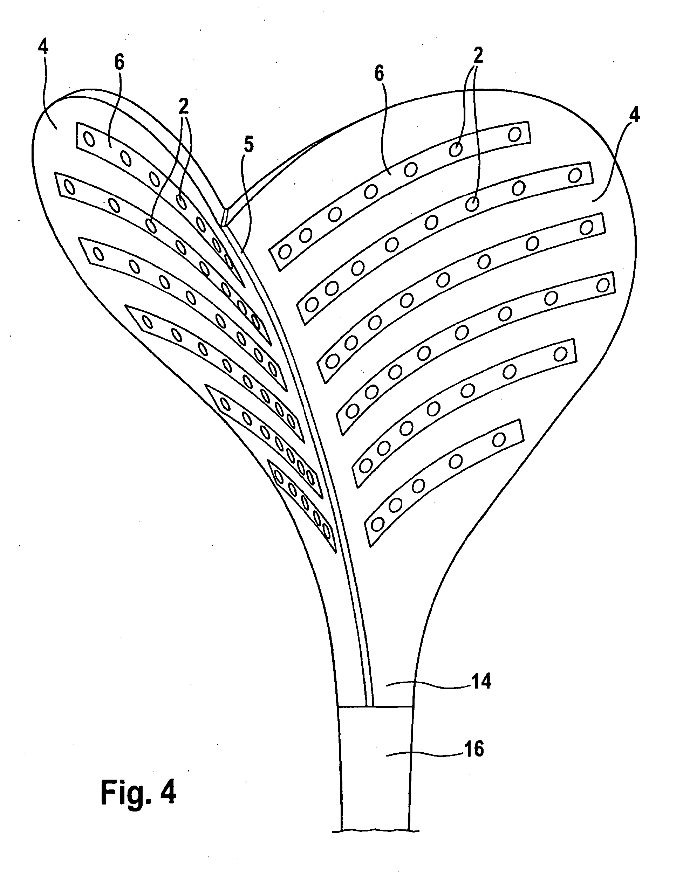

Die Figur 4 zeigt eine alternative Ausführungsform der erfindungsgemäßen Leuchte, die ebenfalls als Straßenleuchte ausgebildet ist. Diese Ausführungsform weist zwei LED-Trägerflächen 4 auf, auf der jeweils Reihen 6 von LEDs 2 angeordnet sind. Die beiden LED-Trägerflächen 4 sind spiegelsymmetrisch bezüglich einer vertikalen Symmetrieebene der Leuchte angeordnet, welche im C-Ebenen System der Ebene mit C = 90°, d.h. der Vertikalebene quer zur Fahrbahnlängserstreckung, entspricht. Die beiden LED-Trägerflächen weisen in jedem Punkt ihrer Fläche jeweils zwei fiktive Schnittebenen auf, welche die Flächennormale einschließen und die beide eine konkave Krümmungskurve mit der LED-Trägerfläche 4 bilden. Insbesondere ist die LED-Trägerfläche 4 auch an dem Schnitt entlang der vertikalen Spiegelebene der Leuchte konkav ausgebildet. Die beiden LED-Trägerflächen 4 sind so ausgerichtet, um die Fahrbahn, insbesondere in ihrer Längserstreckung gut auszuleuchten. Dazu ist die Flächennormale in der Mitte jeder Trägerfläche 4 etwa in einem Winkel von ±45° gegenüber der vertikalen Spiegelebene in der Projektion auf eine horizontale Ebene abgewinkelt. Die durch diese Leuchte erzeugte Lichtverteilung entspricht etwa der in Figur 3 dargestellten Lichtverteilungskurve, jedoch ohne das Nebenmaximum 12.

Bei der Ausführungsform nach Figur 4 sind die LEDs innerhalb der Reihen 6 in Richtung zu der Verbindungskante 5 der LED-Trägerfläche 4 mit einem geringeren Abstand angeordnet und mit einer fokussierenden Optik versehen. Demgegenüber sind die LEDs innerhalb der Reihen 6 in Richtung zu den äußeren Seitenrändern der LED-Trägerfläche mit größeren Abstände angeordnet und besitzen eine LED-Optik, die für einen größeren Öffnungswinkel der jeweiligen kegelförmigen Lichtverteilungen sorgen.

Weitere Ausführungsformen der erfindungsgemäßen LED-Leuchte sind möglich. Die vorhergehend ausführlich beschriebenen Ausführungsformen bezogen sich auf symmetrisch ausgebildete Straßenleuchten, um die Straße in ihrer Längsrichtung möglichst gut auszuleuchten. Für andere Beleuchtungsaufgaben sind die LED-Trägerflächen bzw. die Anordnung der LEDs und die Öffnungswinkel der Lichtkegel der LEDs für die gewünschte Aufgabe angepaßt. Insbesondere können Leuchten vorgesehen sein, welche eine LED-Trägerfläche aufweist, die sich um die gesamte Leuchte rotationssymmetrisch erstreckt, wobei beispielsweise entlang der vertikalen Richtung eine konkave Krümmung der LED-Trägerfläche vorgesehen ist.

Eine LED-Trägerfläche kann auch beidseitig mit LEDs besetzt sein, um beispielsweise für Innenraumleuchten noch einen Indirektanteil von Licht zu erzeugen, der entgegen die Hauptabstrahlrichtung der Leuchte nach oben erfolgt.

Bei Außenleuchten kann auch vorgesehen sein, die Rückseite der LED-Trägerfläche die Leuchte mit Solarzellen zu besetzen, welche über einen Zwischenspeicher für die Energieversorgung der LEDs sorgen. Der Zwischenspeicher ist in Form einer Batterie vorzugsweise in dem Leuchtenmast angeordnet und wird über einen Konverter von den Solarzellen geladen. Die Batterie ist so dimensioniert, daß sie die Stormversorgung über die tägliche Betriebszeit der Leuchte, z.B. zwischen sechs und acht Stunden, gewährleisten kann. Gegebenfalls, sofern es die örtlichen Gegebenheiten nicht zulassen, die Batterie ausschließlich durch Solarzellen zu speisen, kann zusätzlich auch ein Ladegerät für die Batterie vorgesehen sein, welches die Batterie aus dem Stromnetz bei Unterschreiten einer Mindestbatteriespannung auflädt.

### Bezugszeichenliste:

- 2: LED
- 4: LED-Trägerfläche
- 5: Verbindungskante
- 6: LED-Reihe, z.B. auf einem Board
- 7: Seitlicher Rand der LED-Trägerfläche
- 8: Kühlrippe
- 9: Abdeckung
- 10: Maximum in der Lichtverteilungskurve
- 12: Nebenmaximum der Lichtverteilungskurve
- 14: Mastaufnahme
- 16: Leuchtenmast

## Patentansprüche

1. Straßenleuchte, die als Leuchtmittel mehrere LEDs (2) aufweist, die auf wenigstens einer LED-Trägerfläche (4) verteilt angeordnet sind, die in Richtung einer zu beleuchtenden Fläche ausrichtbar ist,
wobei zur Erzielung einer gewünschten Leuchtdichteverteilung oder Beleuchtungsstärkeverteilung auf der zu beleuchtenden Fläche die LED-Trägerfläche (4) gewölbt ist,
wobei die Wölbung der LED-Trägerfläche (4) wenigstens in Teilbereichen folgendem Konstruktionsprinzip unterliegt:
jeder Punkt auf dem Teilbereich der LED-Trägerfläche (4) besitzt zwei Schnittebenen, die jeweils die Flächennormale an dem Punkt der LED-Trägerfläche enthalten und die mit dem Teilbereich der LED-Trägerfläche jeweils eine gekrümmte Schnittkurve definieren,
wobei wenigstens eine der beiden Schnittkurven eine konkave Krümmung definiert,
**dadurch gekennzeichnet, dass**
die andere der beiden Schnittkurven eine konvexe Krümmung definiert.

2. Straßenleuchte, die.als Leuchtmittel mehrere LEDs (2) aufweist, die auf wenigstens einer LED-Trägerfläche (4) verteilt angeordnet sind, die in Richtung einer zu beleuchtenden Fläche ausrichtbar ist,
wobei zur Erzielung einer gewünschten Leuchtdichteverteilung oder Beleuchtungsstärkeverteilung auf der zu beleuchtenden Fläche die LED-Trägerfläche (4) gewölbt ist,
wobei die Wölbung der LED-Trägerfläche (4) wenigstens in Teilbereichen folgendem Konstruktionsprinzip unterliegt:
jeder Punkt auf dem Teilbereich der LED-Trägerfläche (4) besitzt zwei Schnittebenen, die jeweils die Flächennormale an dem Punkt der LED-Trägerfläche enthalten und die mit dem Teilbereich der LED-Trägerfläche jeweils eine gekrümmte Schnittkurve definieren,
wobei wenigstens eine der beiden Schnittkurven eine konkave Krümmung definiert,
**dadurch gekennzeichnet, dass**
die Leuchte eine zweite LED-Trägerfläche (4) aufweist, wobei zwischen den zwei LED-Trägerflächen eine Verbindungskante (5) gebildet ist und eine LED-Trägerfläche etwa senkrecht zu der Ebene C = 45° und die andere LED-Trägerfläche etwa senkrecht zu der Ebene C = 135° ausgerichtet ist, wobei als C-Ebenen von 0° bis 360° die Ebenen bezeichnet werden, deren gemeinsame Schnittgrade das Lot vom Mittelpunkt der Leuchte auf die zu beleuchtende Fläche ist.

3. Leuchte nach einem der vorhergehenden Ansprüche, wobei wenigstens eine LED (2) oder eine Gruppe von mehreren LEDs eine zugeordnete Optik aufweisen, die lichtreflektierende, lichtbrechende und/oder lichtstreuende Komponenten umfaßt.

4. Leuchte nach Anspruch 3, wobei auf der LED-Trägerfläche LEDs oder Kombinationen aus einer oder mehreren LEDs mit jeweils zugeordneter Optik mit unterschiedlich gebündelter Lichtverteilung angeordnet sind.

5. Leuchte nach einem der vorhergehenden Ansprüche, wobei die summierte Lichtstärke von LEDs (2) oder Kombinationen aus jeweils einer oder mehrerer LEDs mit zugeordneter Optik auf einem Teilbereich der LED-Trägerflächen (4) um wenigstens 30% höher ist als die summierte Lichtstärke der LEDs (2) bzw. der Kombinationen aus jeweils einer oder mehrerer LEDs mit zugeordneter Optik auf einer weiteren Teilfläche der LED-Trägerfläche (4) gleicher Größe.

6. Leuchte nach einem der vorhergehenden Ansprüche, wobei die LEDs (2) auf der LED-Trägerfläche (4) in Abständen zu benachbarten LEDs angeordnet sind, die mehr als ±10%, vorzugsweise mehr als ±20%, von dem mittleren Abstand zur nächsten benachbarten LED (2) oder zur nächsten benachbarten LED mit etwa gleicher Leistung auf der LED-Trägerfläche abweichen.

7. Leuchte nach einem der vorhergehenden Ansprüche, wobei die LEDs (2) auf der LED-Trägerfläche (4) entlang von Reihen (6), vorzugsweise parallelen Reihen, angeordnet sind, wobei die Reihen von LEDs insbesondere auf jeweils einem streifenförmigen Board (6) oder auf Teilstücken von einem streifenförmigen Board angeordnet sind, wobei die streifenförmigen Boards Teile der LED-Trägerfläche (4) bilden.

8. Leuchte nach einem der vorhergehenden Ansprüche, wobei die mittleren Abstände der LEDs (2) mit gleicher Leistung und/oder innerhalb einer Reihe (6) auf der LED-Trägerfläche (4) zu einem Seitenrand oder zu zwei gegenüberliegenden Seitenrändern (7) der LED-Trägerfläche (4) hin abnehmen.

9. Leuchte nach einem der vorhergehenden Ansprüche, wobei an einem Seitenrand (7) oder zu zwei gegenüberliegenden Seitenrändern (7) der LED-Trägerfläche LEDs (2) oder Kombinationen aus einer oder mehreren LEDs mit jeweils zugeordneter Optik angeordnet sind, die im Mittel eine stärker gebündelte Lichtverteilung um ihre jeweilige Hauptabstrahlrichtung aufweisen, als LEDs oder Kombination aus einer oder mehreren LEDs mit jeweils zugeordneter Optik, die nicht an einen Seitenrand der LED-Trägerfläche (4) angrenzen.

10. Leuchte nach einem der vorhergehenden Ansprüche, wobei die LED-Trägerfläche (4) spiegelsymmetrisch bezüglich einer vertikalen Symmetrieebene ausgebildet ist, wobei die Schnittkurve zwischen der vertikalen Symmetrieebene und der LED-Trägerfläche (4) insbesondere eine konkave Krümmung bezüglich der Richtung der zu beleuchtenden Fläche definiert.

11. Leuchte nach Anspruch 10, wobei die LEDs in mehreren Reihen angeordnet sind, welche die Symmetrieebene schneiden, vorzugsweise unter einem Winkel von etwa 90°.

12. Leuchte nach Anspruch 11, wobei die Abstände der LEDs (2) innerhalb einer Reihe (6) von der Symmetrieebene zu jeweils einem Seitenrand (7) oder einer Verbindungskante (5) der LED-Trägerfläche stufenweise oder kontinuierlich abnehmen.

13. Leuchte nach Anspruch 7 oder 12, wobei die LEDs (2) oder einer Kombination aus einer oder mehreren LEDs mit jeweils zugeordneter Optik innerhalb einer Reihe von der Symmetrieebene zu jeweils einem Seitenrand (7) der LED-Trägerfläche (4) kontinuierlich oder stufenweise stärker gebündelte Lichtverteilungen um ihre jeweilige Hauptabstrahlrichtung aufweisen.

14. Leuchte nach einem der Ansprüche 11 bis 13, wobei die LED-Reihen unterschiedliche Längen aufweisen, insbesondere von der Mitte der LED-Trägerfläche zum oberen und unteren Rand der Leuchte schrittweise oder kontinuierlich abnehmende Länge, aufweisen.

15. Leuchte nach einem der vorhergehenden Ansprüche, wobei die LED-Trägerfläche (4) aus einem wärmeleitfähigen Material, insbesondere aus einem Metall, gebildet ist.

16. Leuchte nach einem der vorhergehenden Ansprüche, wobei die LED-Trägerfläche auf einer den LEDs entgegengesetzten Seite einen oder mehrere Kühlkörper (8) aufweist.

17. Leuchte nach einem der vorhergehenden Ansprüche, wobei die LED-Trägerfläche (4) durch eine transparente Abdeckung (9) überspannt ist, die insbesondere wenigstens auf Teilbereichen mattiert ausgeführt ist.

18. Leuchte nach Anspruch 2 oder einem davon abhängigen Anspruch, wobei die zwei LED-Trägerflächen (4) spiegelsymmetrisch bezüglich einer vertikalen Symmetrieebene der Leuchte angeordnet sind, wobei die beiden LED-Trägerflächen (4) an der Symmetrieebene aneinander angrenzen und die LED-Trägerflächen (4) eine Schnittkurve mit der Symmetrieebene bilden, die insbesondere eine konkave Krümmung definiert.

## Claims

1. A street lamp which exhibits as lighting means a plurality of LEDs (2) which are disposed distributed over at least one LED carrier surface (4) which can be directed at a surface to be illuminated,
the LED carrier surface (4) being arched in order to achieve a desired luminance distribution or illuminance distribution on the surface to be illuminated,
the arching of the LED carrier surface (4) being governed - in partial regions at least - by the following design principle:
each point on the partial region of the LED carrier surface (4) possesses two intersecting planes which each contain the surface normal at the point of the LED carrier surface and which with the partial region of the LED carrier surface each define an arched intersecting curve, with at least one of the two intersecting curves defining a concave curvature, **characterised in that** the other of the two intersecting curves defines a convex curvature.

2. A street lamp which exhibits as lighting means a plurality of LEDs (2) which are disposed distributed over at least one LED carrier surface (4) which can be pointed in the direction of a surface to be illuminated, the LED carrier surface (4) being arched in order to achieve a desired luminance distribution or illuminance distribution on the surface to be illuminated, the arching of the LED carrier surface (4) being governed - in partial regions at least - by the following design principle:
each point on the partial region of the LED carrier surface (4) possesses two intersecting planes which each contain the surface normal at the point of the LED carrier surface (4) and which with the partial region of the LED carrier surface (4) each define an arched intersecting curve, with at least one of the two intersecting curves defining a concave curvature, **characterised in that** the lamp exhibits a second LED carrier surface (4), with a connecting edge (5) being formed between the two LED carrier surfaces and one LED carrier surface being oriented approximately perpendicular to plane C = 45° and the other LED carrier surface approximately perpendicular to plane C = 135°, with those planes whose common line of intersection is the vertical from the centre of the lamp to the surface to be illuminated being designated as C-planes from 0° to 360°.

3. The lamp of any one of the preceding claims wherein at least one LED (2) or a group of multiple LEDs exhibit an associated optic comprising light-reflecting, light-refracting and/or light-scattering components.

4. The lamp of claim 3 wherein LEDs or combinations of one or a plurality of LEDs each with associated optics with differently bundled light distribution are arranged on the LED carrier surface.

5. The lamp of any one of the preceding claims wherein the accumulated light intensity of LEDs (2) or combinations of one or a plurality of LEDs with associated optics on a partial region of the LED carrier surfaces (4) is at least 30% greater than the accumulated light intensity of the LEDs (2) or combinations of one or a plurality of LEDs with associated optics on a further part-area of the LED carrier surface (4) of equal size.

6. The lamp of any one of the preceding claims wherein the LEDs (2) on the LED carrier surface (4) are arranged at distances from adjacent LEDs which vary more than ±10%, preferably more than ±20%, from the mean distance to the nearest adjacent LED (2) or to the nearest adjacent LED with approximately the same power on the LED carrier surface.

7. The lamp of any one of the preceding claims wherein the LEDs (2) on the LED carrier surface (4) are arranged in rows (6), preferably parallel rows, the rows of LEDs each being in particular arranged on a strip-shaped board (6) or on segments of a strip-shaped board, with the strip-shaped boards forming parts of the LED carrier surface (4).

8. The lamp of any one of the preceding claims wherein the mean distances of the LEDs (2) with the same power and/or within one row (6) on the LED carrier surface (4) decrease to a side edge or to two opposite side edges (7) of the LED carrier surface (4).

9. The lamp of any one of the preceding claims wherein are arranged on one side edge (7) or two opposite side edges (7) of the LED carrier surface, LEDs (2) or combinations of one or a plurality of LEDs each with associated optics and which on average exhibit a more strongly bundled light distribution about their respective main radiation direction than LEDs or combination of one or a plurality of LEDs each with associated optics which do not adjoin a side edge of the LED carrier surface (4).

10. The lamp of any one of the preceding claims wherein the LED carrier surface (4) is configured mirror-symmetrically relative to a vertical plane of symmetry, with the intersecting curve between the vertical plane of symmetry and the LED carrier surface (4) defining in particular a concave curvature relative to the direction of the surface to be illuminated.

11. The lamp of claim 10 wherein the LEDs are arranged in multiple rows which intersect the plane of symmetry, preferably at an angle of approximately 90°.

12. The lamp of claim 11 wherein the distances of each of the LEDs (2) within a row (6) from the plane of symmetry to a side edge (7) or a connecting edge (5) of the LED carrier surface decrease incrementally or continuously.

13. The lamp of claim 7 or 12 wherein the LEDs (2) or a combination of one or a plurality of LEDs each with associated optics within a row continuously or incrementally exhibit, from the plane of symmetry to a side edge (7) of the LED carrier surface (4), more strongly bundled light distributions about their respective main radiation direction.

14. The lamp of any one of claims 11 to 13 wherein the LED rows exhibit different lengths, in particular exhibit incrementally or continuously decreasing length from the centre of the LED carrier surface to the upper and lower edge of the lamp.

15. The lamp of any one of the preceding claims wherein the LED carrier surface (4) is formed from a thermally conductive material, in particular from a metal.

16. The lamp of any one of the preceding claims wherein the LED carrier surface exhibits one or a plurality of heat sinks (8) on a side opposite the LEDs.

17. The lamp of any one of the preceding claims wherein the LED carrier surface (4) is spanned by a transparent cover (9) which in particular is matted at least in partial regions.

18. The lamp of claim 2 or of a claim dependent thereon wherein the two LED carrier surfaces (4) are arranged mirror-symmetrically relative to a vertical plane of symmetry of the lamp, with the two LED carrier surfaces (4) abutting one another on the plane of symmetry and the LED carrier surfaces (4) forming an intersecting curve with the plane of symmetry which in particular defines a concave curvature.

## Revendications

1. Lampe de rue qui comme moyens d'éclairage présente plusieurs DEL (2) qui sont agencées de façon répartie sur au moins une surface de support de DEL (4) qui peut être orientée dans la direction d'une surface à éclairer, étant entendu qu'aux fins de la réalisation d'une répartition souhaitée de la luminance ou de la puissance d'éclairage sur la surface à éclairer, la surface de support de DEL (4) est courbée,
étant entendu que la courbure de la surface de support de DEL (4) est soumise au moins dans des zones partielles au principe de construction suivant :
chaque point sur la zone partielle de la surface de support de DEL (4) possède deux niveaux de coupe qui contiennent chacun la normale de la surface au point de la surface de support de DEL et qui définissent chacun avec la zone partielle de la surface de support de DEL une courbe de coupe curviligne,
étant entendu qu'au moins une des deux courbes de coupe définit une forme concave,
**caractérisée**
**en ce que** l'autre des deux courbes de coupe définit une forme convexe.

2. Lampe de rue qui comme moyens d'éclairage présente plusieurs DEL (2) qui sont agencées de façon répartie sur au moins une surface de support de DEL (4) qui peut être orientée dans la direction d'une surface à éclairer,
étant entendu qu'aux fins de la réalisation d'une répartition souhaitée de la luminance ou de la puissance d'éclairage sur la surface à éclairer, la surface de support de DEL (4) est courbée,
étant entendu que la courbure de la surface de support de DEL (4) est soumise au moins dans des zones partielles au principe de construction suivant :
chaque point sur la zone partielle de la surface de support de DEL (4) possède deux niveaux de coupe qui contiennent chacun la normale de la surface au point de la surface de support de DEL et qui définissent chacun avec la zone partielle de la surface de support de DEL une courbe de coupe curviligne,
étant entendu qu'au moins une des deux courbes de coupe définit une forme concave,
**caractérisée**
**en ce que** la lampe présente une deuxième surface de support de DEL (4), étant entendu qu'un bord de raccordement (5) est formé entre les deux surfaces de support de DEL et qu'une surface de support de DEL est orientée sensiblement verticalement par rapport au plan C = 45° et l'autre surface de support de DEL sensiblement verticalement par rapport au plan C = 135°, étant entendu que sont désignés comme plans C de 0° à 360° les plans dont le degré de coupe commun est la perpendiculaire du point central de la lampe sur la surface à éclairer.

3. Lampe selon l'une des revendications précédentes, étant entendu qu'au moins une DEL (2) ou un groupe de plusieurs DEL présentent une optique y afférente, qui comprend des composants de réflexion de la lumière, de réfaction de la lumière et/ ou de dispersion de la lumière.

4. Lampe selon la revendication 3, étant entendu que sur la surface de support de DEL sont agencées des DEL ou des combinaisons d'une ou plusieurs DEL avec leur optique respective y afférente ayant une répartition de lumière focalisée de façon différente.

5. Lampe selon l'une des revendications précédentes, étant entendu que la puissance d'éclairage cumulée de DEL (2) ou de combinaisons respectives d'une ou plusieurs DEL avec leur optique y afférente dans une zone partielle de la surface de support de DEL (4) est au moins 30 % plus élevée que la puissance d'éclairage cumulée des DEL (2) ou des combinaisons respectives d'une ou plusieurs DEL avec leur optique y afférente dans une autre zone partielle de la surface de support de DEL (4).

6. Lampe selon l'une des revendications précédentes, étant entendu que les DEL (2) sont agencées sur la surface de support de DEL (4) à des distances, par rapport aux DEL adjacentes, qui diffèrent de plus de ± 10 %, de préférence de plus de ± 20 %, de la distance moyenne par rapport à la DEL (2) adjacente la plus proche ou à la DEL adjacente la plus proche ayant sensiblement la même puissance sur la surface de support de DEL.

7. Lampe selon l'une des revendications précédentes, étant entendu que les DEL (2) sont agencées sur la surface de support de DEL (4) le long de rangées (6), de préférence de rangées parallèles, étant entendu que les rangées de DEL sont en particulier agencées chacune sur une plaque en forme de bande (6) ou sur des morceaux partiels d'une plaque en forme de bande, étant entendu que les plaques en forme de bande constituent des parties de la surface de support de DEL (4).

8. Lampe selon l'une des revendications précédentes, étant entendu que les distances moyennes entre les DEL (2) ayant la même puissance et/ou à l'intérieur d'une rangée (6) sur la surface de support de DEL (4) vont en diminuant en direction d'un bord latéral ou de deux bords latéraux opposés (7) de la surface de support de DEL (4).

9. Lampe selon l'une des revendications précédentes, étant entendu que sur un bord latéral (7) ou sur deux bords latéraux opposés (7) de la surface de support de DEL, sont agencées des DEL (2) ou des combinaisons d'une ou plusieurs DEL avec leur optique respective y afférente qui présentent, en moyenne, une répartition de lumière focalisée plus puissante autour de leur direction de rayonnement principale respective que les DEL ou les combinaisons d'une ou plusieurs DEL avec leur optique respective y afférente qui ne sont pas adjacentes à un bord latéral de la surface de support de DEL (4).

10. Lampe selon l'une des revendications précédentes, étant entendu que la surface de support de DEL (4) est réalisée de façon symétrique par rapport à un plan de symétrie vertical, étant entendu que la courbe de coupe entre le plan de symétrie vertical et la surface de support de DEL (4) définit en particulier une forme concave par rapport à la direction de la surface à éclairer.

11. Lampe selon la revendication 10, étant entendu que les DEL sont agencées en plusieurs rangées qui coupent le plan de symétrie, de préférence dans un angle d'environ 90°.

12. Lampe selon la revendication 11, étant entendu que les distances entre les DEL (2) à l'intérieur d'une rangée (6) vont en diminuant de façon échelonnée ou continue depuis le plan de symétrie vers respectivement un bord latéral (7) ou un bord de raccordement (5) de la surface de support de DEL.

13. Lampe selon la revendication 7 ou 12, étant entendu que les DEL (2) ou une combinaison d'une ou plusieurs DEL avec leur optique respective y afférente à l'intérieur d'une rangée présentent, depuis le plan de symétrie vers respectivement un bord latéral (7) de la surface de support de DEL (4), des répartitions de lumière focalisées plus puissantes de façon continue ou échelonnée autour de leur direction de rayonnement principale respective.

14. Lampe selon l'une des revendications 11 à 13, étant entendu que les rangées de DEL présentent des longueurs différentes, en particulier une longueur diminuant de façon échelonnée ou continue depuis le milieu de la surface de support de DEL vers le bord supérieur et inférieur de la lampe.

15. Lampe selon l'une des revendications précédentes, étant entendu que la surface de support de DEL (4) est réalisée dans un matériau conductible thermiquement, en particulier dans un métal.

16. Lampe selon l'une des revendications précédentes, étant entendu que la surface de support de DEL présente un ou plusieurs éléments de refroidissement (8) sur un côté opposé aux DEL.

17. Lampe selon l'une des revendications précédentes, étant entendu que la surface de support de DEL (4) est surmontée d'un recouvrement transparent (9), qui est en particulier réalisé de façon matifiée au moins dans des zones partielles.

18. Lampe selon la revendication 2 ou une revendication dépendante de la revendication 2, étant entendu que les deux surfaces de support de DEL (4) sont agencées symétriquement par rapport à un plan de symétrie vertical de la lampe, étant entendu que les deux surfaces de support de DEL (4) sont adjacentes l'une à l'autre au niveau du plan de symétrie et que les surfaces de support de DEL (4) forment avec le plan de symétrie une courbe de coupe qui définit en particulier une forme concave.
